Europäisches Patentamt

European Patent Office

Office européen des brevets

(19)

(11) Veröffentlichungsnummer : **0 468 953 A2**

# (12) EUROPÄISCHE PATENTANMELDUNG

(21) Anmeldenummer : **91890160.4**

(22) Anmeldetag : **18.07.91**

(51) Int. Cl.$^5$ : **B23K 9/133**

(30) Priorität : **24.07.90 AT 1551/90**

(43) Veröffentlichungstag der Anmeldung :
**29.01.92 Patentblatt 92/05**

(84) Benannte Vertragsstaaten :
**AT BE CH DE DK ES FR GB GR IT LI LU NL SE**

(71) Anmelder : **BÖHLER SCHWEISSTECHNIK
GESELLSCHAFT m.b.H.
Deuchendorf
A-8605 Kapfenberg (AT)**

(72) Erfinder : **Müller, Günter, Dipl.-Ing.
Gustav Mahlerweg 22
A-8605 Kapfenberg (AT)**

(54) **Verfahren und Vorrichtung zum automatischen oder halbautomatischen Schweissen.**

(57)  Die Erfindung bezieht sich auf ein Verfahren und eine Vorrichtung zum automatischen oder halbautomatischen Schweißen, wobei der Schweißdraht einer Vorratseinheit entnommen und einem Schweißautomaten zugeleitet wird.

Um Stillstände bei Vorratsersatz und Unterbrechungen größerer Schweißungen zu minimieren bzw. zu vermeiden sowie die Qualität der Verbindung zu sichern und gegebenenfalls zu kontrollieren und dokumentieren, ist erfindungsgemäß vorgesehen, in einem ersten Schritt das Gesamtgewicht des Schweißdrahtes in der Vorratseinheit zu ermitteln und in einem zweiten Schritt während der Entnahme ein jeweiliges Restgewicht zu messen, die Meßdaten und weitere Daten einer Überwachungs- und Auswerteeinheit zuzuführen und zu aktuellen Daten zu verarbeiten, welche zur Anzeige gebracht und/oder zur Steuerung der Schweißautomaten und/oder zur Qualitätskontrolle und dergleichen verwendet werden.

EP 0 468 953 A2

Die Erfindung betrifft ein Verfahrn und eine Vorrichtung zur Durchführung des Verfahrens nach dem Oberbegriff des Anspruches 1 sowie die Verwendung einer Einrichtung zum automatischen oder halbautomatischen Schweißen.

Einrichtungen zum automatischen oder halbautomatischen Schweißen werden, insbesondere bei der Herstellung von Teilen, welche aus Komponenten aus flächigem, zumeist vorgeformten Material, gebildet sind, verwendet. Derartige Schweißeinrichtungen bzw. Schweißautomaten eignen sich besonders für eine Großzahlfertigung und werden auch computergesteuert- bzw. geführt bei der Serienfertigung , z.B. in der Automobilindustrie, eingesetzt. Die Bereitstellung des Schweißzusatzwerkstoffes erfolgt in Form von Spulen oder in Verpackungen wie Behälter, Trommeln, Fässern und dgl., von welchen der Schweißdraht der Schweißeinrichtung zugeführt wird.

Um die Stillstände, in welchen nach dem Verbrauch des Schweißdrahtes einer Vorratseinheit diese ausgebracht und eine gefüllte Vorratseinheit in den Bereich der Schweißeinrichtung eingebrach.t und der Schweißdraht in die Arbeitsposition in der Maschine eingeführt wird, anteilsmäßig zu verkürzen, wurde das Fassungsvermögen von derartigen Spulen und Behältern vergrößert und die Neigung zu Störungen durch geeignete Maßnahmen ( DE-PS 31 51 803) verringert. Trotzdem ist es erforderlich, den jeweiligen Vorrat an Schweißdraht in der Verpackung laufend zu kontrollieren, um zum richtigen Zeitpunkt einen Ersatz von Draht vornehmen zu können. Bei Spulen und insbesondere Behältern mit großen Fassungsvermögen ist es jedoch im laufenden Betrieb zumeist schwierig, den jeweiligen Drahtvorrat mit hinreichender Genauigkeit abzuschätzen. Weiters können bei einer Schweißung von großen Werkstücken und/oder bei der Ausführung von langen Schweißnähten Unterbrechungen des Schweißvorganges,in welchen eine leere Vorratseinheit durch eine volle ersetzt wird, zu Unsicherheiten in der Qualität der Verbindung führen. Um gegebenenfalls höchste Sicherheitsforderungen zu erfüllen, wird auf Grund möglicher Fehlbeurteilungen des Restvorrates daher oft nach der Fertigstellung eines Werkstückes oder einer Schweißnaht und vor dem weiteren Schweißbeginn ein Ersatz der Vorratseinheit für Schweißdraht vorgenommen , wobei ein zu großer ungenutzter Restvorrat im Behälter der Einheit verbleibt und/oder verworfen wird.

Auch können Angaben zur Qualitätssicherung, Qualitätsdokumentation und gegebenenfalls Fehlerursachenfindung und/oder Optimierung der Schweißtechnologie zumeist nicht mit einer gewünschten Genauigkeit erfolgen, weil Aufzeichnungen über den spezifischen Verbrauch am Schweißzusatzwerkstoff nicht unmittelbar in aufbereiteter Form vorliegen.

Hier will die Erfindung Abhilfe schaffen und die bekannten Verfahren und Vorrichtungen zum automatischen und halbautomatischen Schweißen derart verbessern, daß bei verminderten Kontrollaufwendungen zur Feststellung der Vorratsmenge die Ausnutzung des in der Vorratseinheit bereitgestellten Schweißdrahtes vergrößert, der Abfall vermindert und spezifische Verbrauchswerte zur Kontrolle und Dokumentation der Qualität der Schweißung als Daten unmittelbar zur Verfügung gestellt werden.

Diese Aufgabe wird bei einem gattungsgemäßen Verfahren und einer Vorrichtung zur Durchführung des Verfahrens durch die kennzeichnenden Merkmale des Anspruchs 1 und Anspruchs 5 gelöst. Vorteilhafte Weiterbildungen der Erfindung sind Gegenstand der Unteransprüche.

Die durch die Erfindung erreichten Vorteile sind im wesentlichen darin zu sehen, daß laufend eine Ermittlung des Gewichtes von Schweißdraht in der Vorratseinheit erfolgt und die sich daraus ergebenden Daten einer vorzugsweise programmierbaren elektronischen Überwachungs- und Auswerteeinrichtung zugeführt werden. Diese einfache Einrichtung verwertet die von der Gewichtsmeßeinrichtung zugeführten und die eingegebenen Daten, führt z.B. vergleichende, kalkulatorische und dgl. Rechenoperationen aus, kann das Ergebnis online oder über Datenträger an eine gegebenenfalls qualitätssichernde Datenbank weitergeben und/oder durch entsprechende Geräte anzeigen und/oder löst ein Signal aus, wenn das aktuelle Schweißdrahtgewicht das eingegebene Gewicht des Restvorrates erreicht. Es können auch je nach Erfordernis und Eingaben mehrere Signale hintereinander, z.B. das erste Zeichen für einen baldigen Transport zur Schweißeinrichtung und das zweite für einen Austausch der Vorratseinheit mit Einführung des Schweißdrahtes in die Einrichtung, ausgelöst werden.

Eine für die Fertigstellung eines Werkstückes, eines Fertigungsvorganges oder einer Schweißnaht benötigte Schweißdrahtmenge kann bei der Serienfertigung durch die Überwachungs- und Auswerteeinrichtung festgestellt und ein Restvorrat von mindestens dieser Schweißdrahtmenge vorgegeben werden. Erreicht nun die aktuelle in der Vorratseinheit verfügbare Schweißdrahtmenge den vorgegebenen Mindestvorrat oder unterschreitet diesen, wird die Schweißanlage abgeschaltet und es erfolgt kein neuerlicher Fertigungsvorgang. Wichtig ist es, daß das Gesamtgewicht des Schweißdrahtes in der Vorratseinheit vor einer Schweißdrahtentnahme genau gemessen wird. Vorteilhafterweise erfolgt dies bei der Verpackung bzw. beim Aufspulen oder Einlegen in die Vorratseinheit.

Im folgenden wird die Erfindung anhand von einer lediglich einen Ausführungsweg darstellende Zeichnung näher erläutert.

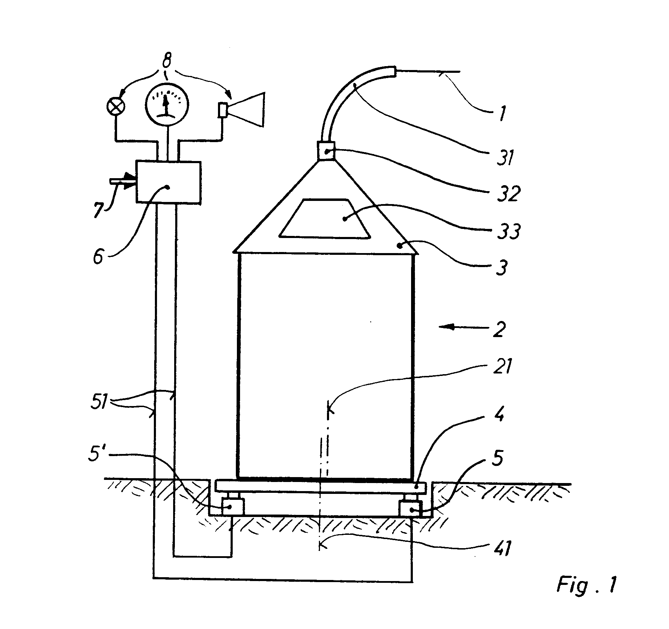

Es zeigt Fig. 1 eine Vorratseinheit für Schweißdraht mit einer Einrichtung zur Gewichtsermittlung und einer Überwachungs- und Auswertungseinheit sowie angeschaltete Geräte schematisch.

Fig.1 zeigt eine Vorratseinheit (2) mit einem Führungsaufsatz (3), welcher eine Befestigung (32) für ein biegsames Führungsrohr (31) aufweist, durch welches ein Schweißdraht (1) einem Schweißautomaten zugeleitet werden kann. Der Führungsaufsatz (3) weist üblicherweise auch ein Schauloch (33) zur optischen Kontrolle eines jeweiligen Vorrates an Schweißdraht auf. Die Vorratseinheit (2) mit einer Schwerpunkachse (21) ist zentrisch auf einer Einrichtung zur Gewichtsermittlung mit einer Auflage (4) mit einer Auflagenmittelachse ( 41) angeordnet, sodaß die Achsen parallel mit einem gewissen Abstand zueinander verlaufen. Die Auflage (4) wird durch Elemente ( 5, 5′) zur Gewichtsmessung abgestützt, welche durch Signalleitungen (51) mit einer Überwachungs- und Auswerteeinrichtung (6) verbunden sind. Wird nun, wie im schematisch dargestellten Fall, das rechte Element (5) mit einer höheren Last beaufschlagt als das linke Element (5′) und werden dadurch unterschiedliche Werte bzw. Daten mittels Signalleitungen (51) der Überwachungs- und Auswerteeinrichtung (6) zugeleitet, so wird von dieser beispielsweise durch Summenwertbil- dung ein tatsächliches Gewicht der Vorratseinheit (2) ermittelt. Die Überwachungs- und Auswerteeinrichtung (6) berechnet unter Zugrundelegung von Daten und Eingaben, die über Eingabemittel (7) eingegeben werden, ein aktuelles Gewicht des Schweißdrahtes, welches durch ein entsprechendes Gerät (8) angezeigt werden kann. Weiters wird aus Eingaben und/oder einer durch Speicherung von Verbrauchswerten an Schweißdraht je Werkstück oder Fertigungsvorgang ein erforderlicher Restmengenvorrat ermittelt und bei Erreichen oder Unterschreiten eines aktuellen Mengenvorrates an Schweißdraht erfolgt eine Auslösung eines Signals und/oder ein Abschalten des Schweißautomaten.

Besonders vorteilhaft ist es, wenn zwischen Überwachungs- und Auswerteeinrichtung (6) und einer Einrichtung (nicht dargestellt) zur Qualitätssicherung oder Dokumentation bzw. zur Speicherung von Verbrauchsdaten je Los oder Arbeitsgang und/oder Zeiteinheit eine Verbindung zur Datenübermittlung ange- ordnet ist. Neben einer Qualitätsdokumentation von Schweißungen mit einer bestimmten gegebenenfalls vorgeschriebenen Verbrauchsmenge von Schweißzusatzwerkstoffen ist mit dem erfindungsgemäßen Verfahren bzw. Vorrichtung auch eine Feststellung betreffend einen Zeitpunkt eines Auftretens oder Ursachen, wie z.B. Einstellungsänderungen am Schweißautomat und dgl., von Fehlern, die im Zuge einer gegebenenfalls röntgenographischen Endkontrolle aufscheinen, möglich. Das erfindungsgemäße Verfahren und die Vorrichtung zur Durchführung des Verfahrens weisen zusätzlich den prozeßtechnischen Vorteil auf, daß auch bei unterschiedlichem oder schwankendem Durchmesser eines Schweißdrahtes durch eine laufende Gewichtserfassung und Steuerung eine Mengenregelung und/oder Feststellung des Gewichtes von verarbeitetem Schweißzusatzwerkstoff je Schweißnahtlängeneinheit erfolgen kann. Weiters werden auch ökono- mische Vorteile erzielt, weil aufwendige und unsichere Füllstands- bzw. Vorratskontrollen von Vorratseinheiten unterbleiben können. Zur von einer Position auf bzw. in einer Wiegeeinrichtung unabhängig durchzuführende Gewichtsmessung der Vorratseinheit sind auch weitere, nicht in Fig. 1 dargestellte Meßverfahren und Meßvorrichtungen einsetzbar.

## Patentansprüche

1.  Verfahren zum automatischen oder halbautomatischen Schweißen, bei welchem ein Schweißdraht von einer Vorratseinheit, beispielsweise einer Spule, oder einem zylindrischen Behälter entnommen, gegebenenfalls über Antriebs- und/oder Bremsmittel geführt und einem Schweißautomaten zugeleitet wird, dadurch gekennzeichnet, daß in einem ersten Schritt das Gesamtgewicht des Schweißdrahtes in der Vorratseinheit ermittelt wird und in einem zweiten Schritt während der Entnahme von Schweißdraht aus der Vorratseinheit ein jeweiliges Restgewicht, vorzugsweise laufend, gemessen wird, die Meßdaten einer Überwachungs- und Auswerteeinrichtung zugeführt und von dieser unter Verwendung von das Gesamtgewicht des Schweißdrahtes beschreibenden Daten und/oder von weiteren eingegebenen und/oder gespeicherten Daten unter Bildung von aktuellen, gegebenenfalls für eine Qualitätsdatenbank geeigneten, Daten verarbeitet werden, durch welche aktuelle Daten bei Verwendung geeigneter Mittel ein aktuelles in der Vorratseinheit befindliches Schweißdrahtgewicht angezeigt und/oder vor der vollkommenen Entleerung der Vorratseinheit bei Erreichen eines durch gespeicherte Daten und/oder Vorwahl, vorzugsweise Größeneinstellung, bestimmten Restvorrat an Schweißdraht mindestens ein Signal ausgelöst und-/oder der Schweißautomat abgeschaltet wird.

2.  Verfahren nach Anspruch 1, dadurch gekennzeichnet, daß im ersten Schritt das Gesamtgewicht des Schweißdrahtes bei dessen Verpackung in die Vorratseinheit gemessen wird.

3.  Verfahren nach Anspruch 1 oder 2, dadurch gekennzeichnet, daß im zweiten Schritt in der Arbeitsposition vor der Entnahme von Schweißdraht das Gewicht der Vorratseinheit mit einer geeigneten Einrichtung gemessen wird und die Meßdaten einer Überwachtungs- und Auswerteeinrichtung zugeleitet werden, in welcher der in Datenform vorliegende Meßwert um das durch Dateneingabe bereitgestellte Gesamtgewicht des Schweißdrahtes unter Bildung eines Tarawertes vermindert wird, welcher Tarawert um den ermittelten oder gewünschten Wert des Restvorratsgewicht erhöht und ein Auslösegewicht für ein Signal oder Schalteinrichtung gebildet wird.

4. Verfahren nach einem der Ansprüche 1 bis 3, dadurch gekennzeichnet, daß die laufend ermittelten Meßdaten und die Vorgaben, gegebenenfalls über Analog/Digitalwandler, einer vorzugsweise elektronischen Überwachungs-und Auswerteeinrichtung zugeführt und in diese verarbeitet und/oder umgesetzt und/oder verglichen werden, von welcher Überwachungs-und Auswerteeinrichtung Signale für deren Speicherung für z.B. Qualitätskontrolle und/oder Schaltungen abgegeben werden.

5. Vorrichtung zum automatischen oder halbautomatischen Schweißen, insbesondere zur Durchführung des Verfahrens nach einem der vorhergehenden Ansprüche, dadurch gekennzeichnet, daß mindestens ein Element (5) zur von der Position auf bzw. in der Wiegeeinrichtung unabhängig durchführbaren, kontinuierlichen Gewichtsmessung einer Vorratseinheit (2) für einen, z.B. nach oben entnehmbaren Schweißdraht (1), mit einer vorzugsweise elektronischen, gegenenenfalls programmierbaren, Überwachungs-und Auswerteeinrichtung (6) , welche Eingabemittel (7), z.B. Tastatur, Leitungen, Magnetkartenleseeinrichtung oder dgl., womit Steuervorgaben und insbesondere das bereits ermittelte Gesamtgewicht des Schweißdrahtes eingebbar ist, aufweist, durch Signalleitungen (51) oder dgl. verbunden ist (sind) und an die Überwachungs- und Auswerteeinrichtung (6) mindestens einem Gerät (8) zur Anzeige und/oder zur Signalauslösung und/oder zur Steuer-bzw. Abschaltung und/oder eine Qualitäts-oder Vorratsdatenbank oder dgl. angeschaltet ist (sind).

6. Vorrichtung nach Anspruch 6, dadurch gekennzeichnet, daß das Element ( die Elemente) (5) zur Gewichtsmessung eine Druckmeßdose ist ( Druckmeßdosen sind).

7. Verwendung einer Vorrichtung zum automatischen oder halbautomatischen Schweißen,bestehend aus einer Wiegevorrichtung mit einer im wesentlichen kontinuierlichen, von der Lage des Vorratsbehälters (2) in der Wiegevorrichtung im wesentlichen unabhängigen Gewichtsmessung und einer mit dieser Wiegevorrichtung verbundenen, vorzugsweise programmierbaren Überwachungs-und Auswerteeinrichtung (6), in welche Daten, insbesondere vorher festgestellte Schweißdrahtgewichte eingebbar sind, an welche Überwachungs- und Auswerteeinrichtung (6) mindestens ein Gerät (8) zur Anzeige und/oder zur Signalauslösung und/oder zur Steuerung bzw. Abschaltung und/oder eine Qualitäts- und/oder Vorratsdatenbank angeschaltet ist (sind) zur Feststellung eines gewünschten oder erforderlichen Restvorrates an Schweißdraht (1) in der Vorratseinheit (2) und/oder zur kontrolle, vorzugsweise zur Qualitätskontrolle, beim automatischen oder halbautomatnischen Schweißen, insbesondere in der Automobilindustrie.

Fig . 1